Europäisches Patentamt

European Patent Office

Office européen des brevets

(19)

(11) Veröffentlichungsnummer: **0 268 186 B1**

# EUROPÄISCHE PATENTSCHRIFT

(12)

(45) Veröffentlichungstag der Patentschrift:
25.04.90

(51) Int. Cl.⁴: **A47J 27/022, A47J 37/10**

(21) Anmeldenummer: 87116574.2

(22) Anmeldetag: 10.11.87

(54) Kochgeschirr.

(30) Priorität: 14.11.86 DE 3639037

(43) Veröffentlichungstag der Anmeldung:
25.05.88 Patentblatt 88/21

(45) Bekanntmachung des Hinweises auf die Patenterteilung:
25.04.90 Patentblatt 90/17

(84) Benannte Vertragsstaaten:
AT BE DE ES FR GB LU NL SE

(56) Entgegenhaltungen:
CH-A- 131 063
CH-A- 218 335
CH-A- 309 874
FR-A- 400 289
FR-A- 767 156
GB-A- 439 581
US-A- 1 970 151

(73) Patentinhaber: Hoffmann, Lothar, Hochstrasse 1,
D-6507 Ingelheim(DE)

(72) Erfinder: Hoffmann, Lothar, Hochstrasse 1,
D-6507 Ingelheim/Rhein(DE)
Erfinder: Kochauf, Josef, Elisabethstrasse 15,
A-1010 Wien(AT)

(74) Vertreter: Hassler, Werner, Dr.,
Postfach 17 04 Asenberg 62, D-5880 Lüdenscheid(DE)

ACTORUM AG

## Beschreibung

Die Erfindung betrifft ein Kochgeschirr, beispielsweise Topf, Pfanne, Kasserolle oder dergleichen, insbesondere für im wesentlichen ebene Kochstellen wie Elektrokochplatten, elektrisch oder mit Gas beheizte Kochfelder, beispielsweise aus feuerfestem Glas, Glaskeramik oder dergleichen, mit an der Außenseite des Geschirrbodens ausgeführten, konzentrischen, kreisförmigen Rillen und mit radialen zum Randbereich verlaufenden Rillen, die von einer in der Mitte des Geschirrbodens angeordneten, vorzugsweise kreisförmigen Vertiefung ausgehen und derart bis zum äußeren Seitenrand reichen, daß sie auch seitlich mit der Umgebungsluft verbunden sind.

Ein derartiges Kochgeschirr für elektrische Herde mit den Merkmalen des Oberbegriff des Anspruchs 1 ist aus FR-A 767 156 bekannt. Ein weiteres Kochgeschirr für elektrische Herde ist aus der CH-A 131 063 bekannt.

Durch die konzentrischen und radialen Rillen soll eine ungleiche Ausdehnung des Bodens bei dessen Erhitzung ausgeglichen werden. Die kreisförmigen Rillen sind daher in regelmäßigen Abständen über den Boden verteilt und untereinander durch radiale Rillen verbunden. Durch die große Kontaktfläche des Bodens auf einer elektrischen Kochplatte wird ein guter Wärmeübergang gewährleistet. Wenn jedoch Flüssigkeit, z.B. beim Überkochen des Kochgutes unter den Topfboden gelangt und dort verdampft, wird wegen des geschlossenen Systems der Rillen nach einer gewissen Zeit das Kochgeschirr angehoben und gegebenenfalls über die Kochstelle bewegt. Dies bewirkt häufig, daß weiteres Kochgut aus dem Kochgeschirr austritt, so daß sich der Vorgang fortsetzt bzw. wiederholt. Dieser Vorgang ist mit einer unangenehmen Geräuschentwicklung verbunden. Bei schweren Töpfen tritt zudem die Gefahr von Beschädigungen auf, insbesondere dann, wenn die Töpfe auf einer Kochstelle aus feuerfester Glaskeramik benutzt werden. Feuerfeste Glaskeramik ist insbesondere in erhitztem Zustand spröde, so daß die Gefahr besteht, daß die Glaskeramik springt, wenn schweres Kochgeschirr durch den Dampfdruck angehoben wird und dann mit einer Kante auf die Kochstelle zurückfällt.

Aus der FR-PS 767.156 ist ein Kochgeschirr bekannt, dessen Boden mit konzentrischen erhöhten Rippen versehen ist, in die vom Rand ausgehende, teilweise bis zur Mitte reichende, radiale Nuten bildende Durchbrüche eingearbeitet sind. Bei Töpfen mit derartigen Böden kann eine unter den Topfboden gelangende Flüssigkeit problemlos verdampfen, ohne daß die Gefahr besteht, daß der Topf angehoben wird. Bei derartigen Topfböden ist jedoch durch die verhältnismäßig geringe Berührungsfläche zwischen Topfboden und Kochplatte der Wärmeübergang sehr schlecht, so daß beim Kochen mit derartigen Kochgeschirren viel Energie verbraucht wird.

Aus der EP-A O 175 462 ist ein Kochtopf bekannt, dessen Boden in kaltem Zustand eine Wölbung aufweist, die im heißen Zustand plan wird, um einen guten Kontakt und damit Wärmeübergang auf der jeweiligen planen Kochstelle zu gewährleisten. Sofern zwischen dem Boden des Topfes und der Kochstelle Flüssigkeit verdampft, treten die oben beschriebenen Probleme auf.

Aus dem DE-Gbm 1 698 352 ist ein spezieller Gaskochtopf bekannt, der einen nach unten erhöhten vorspringenden Außenrand und darin ausgeführte Einschnitte aufweist, damit das Kochgeschirr auf dem die Gasflamme umgebenden Gitter einen festeren Halt im Eingriff mit den Einschnitten finden kann. Ein derartiger Topf ist auf Elektroplatten bzw. Keramikplatten nicht einsetzbar, da der Wärmeübergang von der Kochplatte zum Topft ausschließlich durch den erhöhten Außenrand bewirkt werden kann.

Aufgabe der Erfindung ist es, ein Kochgeschirr der eingangs genannten Art dahingehend zu verbessern, daß einerseits ein großflächiger Kontakt des Geschirrbodens mit einer glatten Kochstelle und damit ein guter Wärmeübergang gewährleistet ist und daß andererseits zwischen dem Kochgeschirrboden und die Kochplatte gelangende Flüssigkeit verdampfen kann, ohne Bewegungen und daraus resultierende Geräusche zu erzeugen, wobei ein Wärmeausgleich im Topfboden möglich ist.

Diese Aufgabe wird durch ein Kochgeschirr mit den Merkmalen des Anspruchs 1 gelöst.

Durch das nach außen zum Seitenrand offene Rillennetz wird einerseits durch deren Zwischenbereiche ein ausreichend guter Kontakt und damit Wärmeübergang mit der jeweiligen planen Kochstelle gewährleistet, andererseits kann zwischen die Kochstelle und den Topfboden gelangende oder am Topfboden anhaftende Flüssigkeit problemlos verdampfen, wobei dieser Vorgang durch die zum Randbereich zunehmende Tiefe der radial verlaufenden Rillen gefördert wird. Durch das erfindungsgemäße Rillensystem wird ein Hitzestau vermieden und somit eine gleichmäßige Wärmeverteilung über den gesamten Boden des Kochgeschirrs sichergestellt. Durch die zentrale Vertiefung in der Mitte des Geschirrbodens kann sich dort der entstehende Dampf ansammeln und nach allen Seiten nach außen abgeleitet werden.

Bei Kochgeschirren mit insbesondere größeren Durchmessern ist es von Vorteil, zwischen den bis zur Vertiefung in der Mitte des Geschirrbodens führenden radial verlaufenden Rillen weitere radiale Rillen vorzusehen, die von einer der kreisringförmigen Rillen ausgehend, ebenfalls bis zum äußeren Seitenrand des Geschirrbodens radial verlaufen, wobei deren Tiefe gegen den Randbereich des Geschirrbodens ebenfalls zunimmt. Hierdurch ist einerseits ein besserer Ausgleich der Bodenplatte bei deren Erwärmung und andererseits eine bessere Dampfableitung möglich.

Es ist auch von Vorteil, wenn die Tiefe der in der Mitte des Geschirrbodens angeordneten Vertiefungen größer als die Tiefe der radial verlaufenden Rillen im angrenzenden Bereich ist, da so der sich vor allem in der Mitte des Geschirrbodens ansammelnde Dampf mit Sicherheit vollständig dort sammeln kann, von wo er dann über die in allen Richtungen radial verlaufenden Rillen abgeführt werden kann. Die Abfuhr des dort entstehenden Dampfes kann auch dadurch unterstützt werden, daß vorzugsweise die Außenseite des Geschirrbodens geringfügig gegen die Mitte zu einwärts noch oben geneigt ausgebildet ist. Durch die Rillen und ihre Anordnung und Ausgestaltung erfolgt wie beim Stand der Technik beim Erhitzen ein natürlicher Dehnungsausgleich, der selbst bei eventuellen Überhitzungen des Bodens bei Störungen der Kochstellen die Ebenheit des Bodens und damit einen guten Wärmeübergang gewährleistet.

Nachfolgend wird die Erfindung anhand eines Ausführungsbeispiels unter Bezug auf Zeichnungen näher erläutert. Es zeigt:

Fig. 1 eine Draufsicht auf die Außenseite des Geschirrbodens eines erfindungsgemäßen Kochgeschirrs,

Fig. 2 einen Schnitt nach Linie II-II von Fig.1.

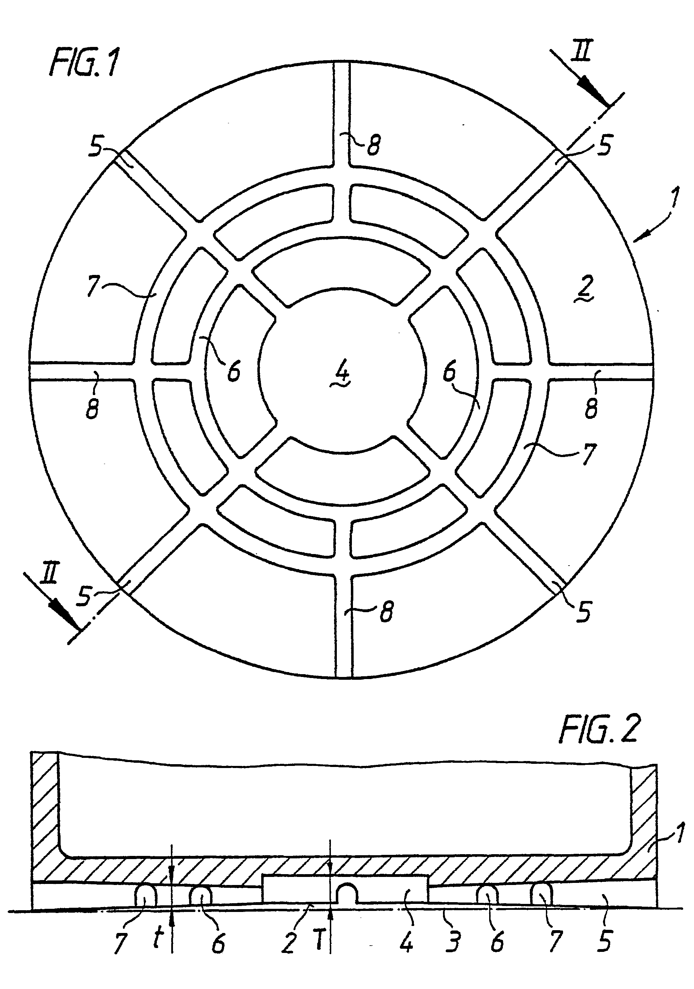

Ein erfindungsgemäßes Kochgeschirr weist einen Geschirrboden 1 auf, dessen Außenseite 2, wie aus Fig. 2 hervorgeht, geringfügig gegen die Mitte zu einwärts nach oben geneigt ausgebildet sein kann. Die Kochstelle 3, auf der die Außenseite 2 des Geschirrbodens 1 aufruht, ist in Fig. 2 strichpunktiert angedeutet.

Der Geschirrboden 1 weist an seiner Außenseite 2 eine zentrale Vertiefung 4 auf, von der vier radial verlaufende Rillen 5 ausgehen. Zentrisch zur Vertiefung 4 sind in Abstand von dieser Vertiefung 4 und voneinander zwei kreisringförmige Rillen 6, 7 ausgeführt, die mit den radial verlaufenden Rillen 5 verbunden sind. Die radial verlaufenden Rillen 5 reichen bis zum Rand des Geschirrbodens 1 und sind nach außen (im Seitenwandbereich) offen.

Zwischen den radial verlaufenden Rillen 5 sind weitere radial verlaufende Rillen 8 vorgesehen, welche jedoch nicht bis zur zentralen Vertiefung 4, sondern nur bis zur ersten, inneren kreisringförmigen Rille 6 reichen.

Die Tiefe 6 der radial verlaufenden Rillen 5, 8 nimmt von der Mitte des Geschirrbodens 1 zum Randbereich hin zu. Die Tiefe t der radial verlaufenden Rillen 5 beträgt beispielsweise an dem der Vertiefung 4 benachbarten Ende 0,8 bis 1,0 mm und am Topfrand 1,2 bis 1,5 mm. Die Tiefe der radial verlaufenden Rillen 8 kann entsprechend ausgebildet sein.

Die Tiefe T der im Bereich der Mitte des Geschirrbodens 1 angeordneten Vertiefung 4 ist größer als die Tiefe t im benachbarten Bereich der radial verlaufenden Rillen 5 und beträgt beispielsweise 1,5 bis 1,7 mm. Die Breite sämtlicher Rillen 5, 6, 7, 8 an der Außenseite 2 des Topfbodens 1 beträgt etwa 4 bis 6 mm.

**Patentansprüche**

1. Kochgeschirr, beispielsweise Topf, Pfanne, Kasserolle oder dergleichen, insbesondere für im wesentlichen ebene Kochstellen wie Elektrokochplatten, elektrisch oder mit Gas beheizte Kochfelder, beispielsweise aus feuerfestem Glas, Glaskeramik oder dergleichen, mit an der Außenseite des Geschirrbodens (1) ausgeführten konzentrischen kreisförmigen Rillen (6, 7) und mit radialen, zum Randbereich verlaufenden Rillen (5), die von einer in der Mitte des Geschirrbodens (1) angeordneten, vorzugsweise kreisförmigen, Vertiefung (4) ausgehen und derart bis zum äußeren Seitenrand reichen, daß sie auch seitlich mit der Umgebungsluft verbunden sind, dadurch gekennzeichnet, daß die Tiefe (t) der radial verlaufenden Rillen (5) gegen den Randbereich des Geschirrbodens (1) zunimmt.

2. Kochgeschirr nach Anspruch 1, dadurch gekennzeichnet, daß zwischen den bis zur Vertiefung (4) in der Mitte des Geschirrbodens (1) führenden radial verlaufenden Rillen (5) weitere radiale Rillen (8) vorgesehen sind, welche von einer der kreisringförmigen Rillen (6) ausgehend, ebenfalls bis zum äußeren Seitenrand des Geschirrbodens (1) radial verlaufen, wobei deren Tiefe (t) gegen den Randbereich des Geschirrbodens (1) ebenfalls zunimmt.

3. Kochgeschirr nach Anspruch 1 oder 2, dadurch gekennzeichnet, daß die Tiefe (T) der in der Mitte des Geschirrbodens (1) angeordneten Vertiefung (4) größer ist als die Tiefe (t) der radial verlaufenden Rillen (5) im angrenzenden Bereich.

4. Kochgeschirr nach einem der Ansprüche 1 bis 3, dadurch gekennzeichnet, daß die Außenseite (2) des Geschirrbodens (1) geringfügig gegen die Mitte zu einwärts nach oben geneigt ausgebildet ist.

**Claims**

1. Cooking vessel, for example a saucepan, frying pan, casserole or the like, in particular for substantially plane cooking points such as electric hotplates, cooking surfaces heated electrically or by gas, for example of flame-resistant glass, glass ceramic or the like, having concentric circular grooves (6, 7) made on the outside of the vessel bottom (1) and radial grooves (5) extending as far as the edge region and radiating from a preferably circular depression (4), which is arranged in the centre of the vessel bottom (1), and reaching as far as the outer side edge such that they are also connected laterally to the surrounding air, characterized in that the depth (t) of the radially extending grooves (5) increases towards the edge region of the vessel bottom (1).

2. Cooking vessel according to Claim 1, characterized in that, between the radially extending grooves (5) leading to the depression (4) in the centre of the vessel bottom (1) are provided further radial grooves (8) which radiate from one of the annular grooves (6) and also extend radially as far as the outer side edge of the vessel bottom (1), with their depth (t) also increasing towards the edge region of the vessel bottom (1).

3. Cooking vessel according to Claim 1 or 2, characterized in that the depth (T) of the depression (4) arranged in the centre of the vessel bottom (1) is greater than the depth (t) of the radially extending grooves (5) in the adjacent region.

4. Cooking vessel according to one of Claims 1 to 3, characterized in that the outside (2) of the vessel bottom (1) is made to incline slightly upwards and inwards towards the centre.

**Revendications**

1. Récipient de cuisson, par exemple une marmite, une poêle, une casserole ou analogues, en particulier pour des emplacements de cuisson sensiblement plans, tels que plaques de cuisson électriques, zones de cuisson chauffées électriquement ou au gaz, par exemple en verre réfractaire, en vitro-céramique ou analogues, présentant des rainures (6, 7) en forme de cercles concentriques réalisées sur la face externe du fond (1) du récipient et des rainures radiales (5), qui s'étendent vers la zone de bord, qui partent d'un évidement (4), de préférence circulaire, et agencé au centre du fond (1) du récipient, et qui parviennent jusqu'au bord latéral externe de manière qu'elles soient en communication avec l'air environnant également latéralement, caractérisé en ce que la profondeur (t) des rainures (5) s'étendant radialement augmente vers la zone de bord du fond (1) du récipient.

2. Récipient de cuisson suivant la revendication 1, caractérisé en ce qu'il est prévu, entre les rainures (5) qui s'étendent radialement et qui conduisent jusqu'à l'évidement (4) au centre du fond (1) du récipient, d'autres rainures radiales (8), qui s'étendent en partant de l'une des rainures en forme d'anneau circulaire (6), également radialement jusqu'au bord latéral externe du fond (1) du récipient, la profondeur (t) de celle-ci augmentant également vers la zone de bord du fond (1) de récipient.

3. Récipient de cuisson suivant la revendication 1 ou 2, caractérisé en ce que la profondeur (T) de l'évidement (4), qui est agencé au centre du fond (1) de récipient, est supérieure à la profondeur (t) des rainures (5), qui s'étendent radialement dans la zone adjacente.

4. Récipient de cuisson suivant l'une des revendications 1 à 3, caractérisé en ce que la face externe (2) du fond du récipient (1) est réalisée de manière légèrement inclinée vers le haut, en direction du centre, vers l'intérieur.

*FIG.1*

*FIG.2*